# EUROPEAN PATENT SPECIFICATION

(11) **EP 2 676 550 B1**
(45) Date of publication and mention of the grant of the patent: **31.12.2014**
(21) Application number: 12172804.2
(22) Date of filing: 20.06.2012
(51) Int. Cl.: A23G 3/12, A23G 3/56, B30B 11/02

(54) **Candy moulding machine**
Süßigkeitsformmaschine
Machine de moulage de confiserie

(43) Date of publication of application: 25.12.2013
(73) Proprietor: GEA Food Solutions Weert B.V., 6006 RV Weert (NL)
(72) Inventor: Asma, Seferinus Jelle, 5503CM Veldhoven (NL)
(74) Representative: Wolff, Felix

(56) References cited:
- EP-A1- 2 279 668
- US-A- 3 541 973
- US-A- 4 168 139

## Description

The present invention relates to a method for moulding a lollipop from a piece of mass of a sugar bar or a similar material, comprising the steps:
- providing a rotatable central ring having an axis of rotation and a multitude of circumferentially spaced, radially extending press chambers, wherein each press chamber comprises an insert area to insert a stick into the mass
- providing a pair of inner- and outer stamps per press chamber for pressing a pieces of the mass into the desired shape by displacing at least the inner stamp relative to the press chamber

The present invention further relates to an apparatus for moulding a lollipop from a piece of mass of a sugar bar or a similar material, comprising:
- a rotatable central ring having an axis of rotation and a multitude of circumferentially spaced, radially extending press chambers, wherein each press chamber comprises an insert area to insert a stick into the mass
- a pair of inner and outer stamps per press chamber for pressing a piece of the mass into the desired shape, whereas at least the inner stamp is displaceable during pressing and the inner stamp is driven by a pressure curve

Such method and apparatus are for example known from the European patent EP 0 501 574 B1. These machines comprise a rotating die-ring, in which a number of the circumferentially spaced radially extending press chambers are located. Supply means feed a mass, for example a sugar bar, or similar material towards these pressure chambers, where pieces are cut from the bar and placed into the pressing chamber. A pair of inner and outer stamps per chamber then presses the piece into the desired shape. A stick can be inserted into the mass.

It was the objective of the present invention to improve the method and the apparatus according to the state of the art.

This problem is solved with a method for moulding a lollipop from a piece of mass of a sugar bar or a similar material, comprising the steps:
- providing a rotatable central ring having an axis of rotation and a multitude of circumferentially spaced, radially extending press chambers, wherein each press chamber comprises an insert area to insert a stick into the mass,
- providing a pair of inner and outer stamps per press chamber for pressing a piece of the mass into the desired shape by displacing at least the inner stamp relative to the press chamber,
- prepressing the mass,
wherein the insert area is, at least partially, preferably entirely, closed prior to inserting the stick.

The disclosure made regarding this subject matter also applies to other subject matters of the present invention and vice versa.

The present invention relates to a method for moulding a lollipop from a mass of a sugar bar or a similar material. The inventive method can be carried out on a machine which comprises a central ring, which has an axis of rotation and a multitude of circumferentially spaced radially extending press chambers. This rotatable central ring preferably rotates with 40 to 100, more preferably 50 to 80 rpm. Depending on the number of press chambers in the die-ring, it is possible to produce 1.000 lollipops per minute or more. Each lollipop produced comprises a stick, which is inserted into the mass preferably during the forming of the mass into its desired shape. Therefore, each press chamber comprises an insert area to insert the stick into the mass. During this insertion, the stick is preferably guided by the insert area.

Additionally, a pair of inner and outer stamps per press chamber is provided for pressing a piece of the mass into the desired shape. This is accomplished by displacing at least the inner stamp relative to the press chamber. The stamps are supported at the central ring and/or at the press chamber, respectively. The outer stamp is preferably pivotable around a centre of rotation located at the central ring or at the press chamber. The inner stamp is preferably mounted axially displaceably. Preferably, the inner stamp is displaced during the pressing of the piece, while the outer stamp preferably only functions as a counter bearing, which is preferably stationary during the pressing operation.

The mass of the lollipop is prepressed into an intermediate shape and then, preferably after the stick has been inserted into the mass, brought into its final shape.

Each press chamber, the inner and the outer stamp co-rotate with the central ring.

The motion of the inner stamp is, preferably driven by a pressure curve. Since the inner stamp is attached to the central ring, it co-rotates with the central ring. During this rotation, the inner stamps are at least temporarily in contact with the pressing curve and displaced axially by the pressure curve. Preferably, the stamps are connected to a rod, whereas the stamp is on one side of the rod and a roll is on the other side of the rod. This roll rolls along the pressure curve, so that the rod and thus the stamp are displaced.

Preferably, this pressure curve comprises at least two parts, which are more preferably adjustable individually. Due to the split of the pressure curve, it is possible to produce well shaped candies, even though the mass pieces provided are not identical.

In a preferred embodiment, the curve comprises a pressure reduction zone, i.e. the mass is preformed/prepressed by a certain pressure and then this pressure is reduced, at least not further increased. In this pressure reduction zone, more preferably a stick is inserted into the preformed mass piece. After the stick is inserted, the pressure is preferably increased again to form the mass into its final shape. This is preferably accomplished by further displacing the inner stamp relative to the pressure chamber, for example by pushing the inner stamp radiallly outward.

According to the present invention, the insert area of the pressing chamber is at least partially, preferably entirely closed even during the prepressing of the mass. Thus, during the forming of the mass, the mass does not leak out of the insert area, even though no stick is yet inserted into the mass.

In a first embodiment of the present invention, this closure of the insert area is accomplished by closing the insert area with a closing means and/or the stick. The stick is preferably accommodated between the closing means and the lower stamp and extends into the insert area. However, during the prepressing, the stick is preferably at most only partially inserted into the mass, i.e. the stick is not brought into its final position relative the mass and/or the press chamber. More preferably, the stick is not at all inserted into the mass. However, the stick closes the insert area, so that no mass leaks from the insert area during prepressing of the mass.

According to a second embodiment, the closing means close the insert area, preferably after the mass has been inserted into the press chamber and prior or after the forming of the mass is started. However, a closure of the insert area prior to starting the forming of the food mass is preferred. For the insertion of the stick, the insert area is, at least partially reopened again. Preferably, the closing means is moved radially inward, i.e. radially towards the axis of rotation of the central ring, to close the insert area and then radially outward, i.e. radially away from the axis of rotation of the central ring, to reopen it.

According to another or a preferred embodiment of the present invention, one closing means per press chamber is provided to close the insert area.

The disclosure made regarding this subject matter also applies to other subject matters of the present invention and vice versa.

According to a preferred embodiment of the present invention, the mass is first preformed in the press chamber. Subsequently, a stick is inserted and then the mass is brought into its final shape. Preferably, the insert area is closed during the performing of the mass and then reopened for the insertion of the stick.

In order to move the closing means, for example to close the insert area and reopen it, preferably a drive means is provided that moves each closing means in two opposite directions. Preferably, only one single drive means is provided even though one closing means is provided per press chamber. Preferably, the drive means is stationary, i.e. does not co-rotate with the central ring. Preferably, the driving means drives each closing means, preferably in two opposite directions.

Preferably, the closing means is moved, preferably linearly, relative to the outer stamp. Preferably, the closing means slide relative to the outer stamp.

Another subject matter of the present invention is an apparatus for moulding a lollipop from a piece of mass of a sugar bar or a similar material, comprising:
- a rotatable central ring having an axis of rotation and a multitude of circumferentially spaced, radially extending press chambers, wherein each press chamber comprises an insert area to insert a stick into the mass
- a pair of inner- and outer stamps per press chamber for pressing a pieces of the mass into the desired shape, whereas at least the inner stamp is displaceable and during pressing, the inner stamp is driven by a pressure curve,
wherein it comprises a closing means and/or the stick of the lollipop is utilized to close the insert area during prepressing of the mass.

The disclosure made regarding this subject matter also applies to other subject matters of the present invention and vice versa.

The inventive apparatus comprises preferably 15 press chambers.

According to this embodiment, the apparatus comprises a closing means, preferably a closing means per pressing chamber, to close the insert area. Preferably, the closing means is slidably barred at the outer stamp. Preferably, the outer stamp comprises a groove, a recess or the like, more preferably with a rectangular or square cross section, in which the closure means is slidably provided.

Preferably, the closing means comprises a first end that interacts with a drive means and a second end that closes the insert area. The drive means is preferably a curved strip, which acts as a drive curve for the closure means. The drive means is preferably stationary and drives each closure means at least in one, preferably in two opposite directions, while they move past the drive means. More preferably, the first end of the closure means interacts on two opposite sides of the drive means, preferably the curved strip. More preferably, the first end is U-shaped, wherein even more preferably, the U circumferences the drive means, preferably the curved strip. Thus, both wings of the U can interact with the drive means and the closure means can be driven radially inwardly and radially outwardly.

According to another or a preferred embodiment of the present invention, the central ring is made from one piece. Preferably, the central ring is casted and/or milled.

The disclosure made regarding this subject matter also applies to other subject matters of the present invention and vice versa.

This preferred or inventive embodiment of the present invention has the advantage, that the shape of the central ring is more stable and its rotational symmetry is more accurate.

Preferably, the press chambers, the outer stamp and/or the inner stamp are, preferably reversibly, attached, for example screwed, to the central ring. Preferably, the press chambers, the outer stamp and/or the inner stamp are made from a different, more preferably more wear-resistant material than the central ring.

According to a preferred embodiment of the present invention, the machine comprises a stationary outer ring, which is located coaxially to the die-ring but comprises a larger diameter. Preferably, this outer ring comprises a pressure zone. This pressure zone either holds the outer stamp in place or even moves the outer stamp axially towards the inner stamp. Preferably, this pressure zone comprises a multitude of rolls. These rolls are in contact with the outer stamp and/or a lid of the pressing chamber to which the outer stamp is attached. Preferably, the pressure zone comprises a multitude of rolls, which are arranged in rows, whereas, more preferably, several rows of rolls are arranged in parallel. Preferably the rolls of two adjacent rows are staggered. Due to the rolls, the wear at the outer stamps and/or the lid is reduced. Preferably, the outer diameter of each roll is less than 16 mm. Preferably, 4 -5 rolls are in contact with the lid and/or the outer stamp. This leads to a better pressure distribution.

In another preferred embodiment of the present invention, the outer ring further comprises an opening zone in which the lid and/or the outer stamp are displace, preferably pivoted away from the press chamber in order to remove the lollipop, from the inventive apparatus. This opening zone preferably comprises a three-dimensional shaped curve, which opens the lid and holds the lid into the open position, while the individual press chamber rotates along this part of the outer ring.

The invention will now be further illustrated herein after on the basis of the drawings indicating by way of example, a machine for making lollipops. These explanations do not limit the scope of protection and apply to all inventive or preferred embodiments of the present invention likewise.
- **Figures 1** - **4**: show the inventive apparatus.
- **Figure 5**: shows the inner stamp.
- **Figure 6**: shows the outer pressure zone.
- **Figure 7**: shows details of the drive means 8.
- **Figure 8**: shows details of the attachment of the press chamber at the central ring.
- **Figure 9**: shows guiding means for the stick.
- **Figure 10**: shows yet another embodiment of the present invention.

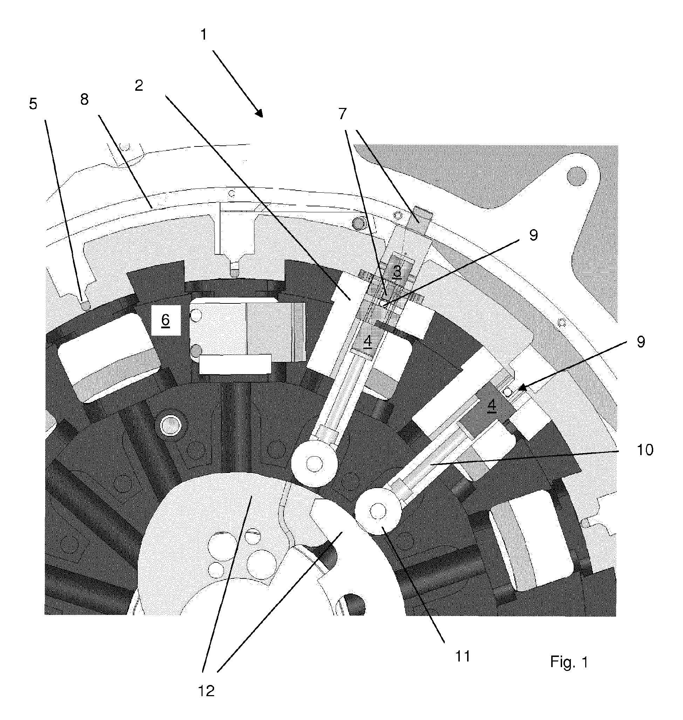

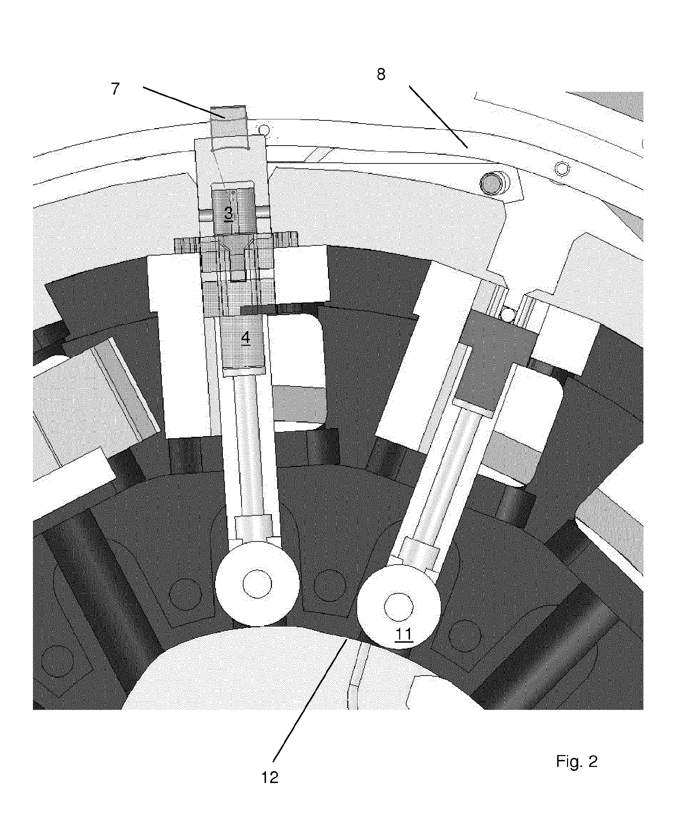

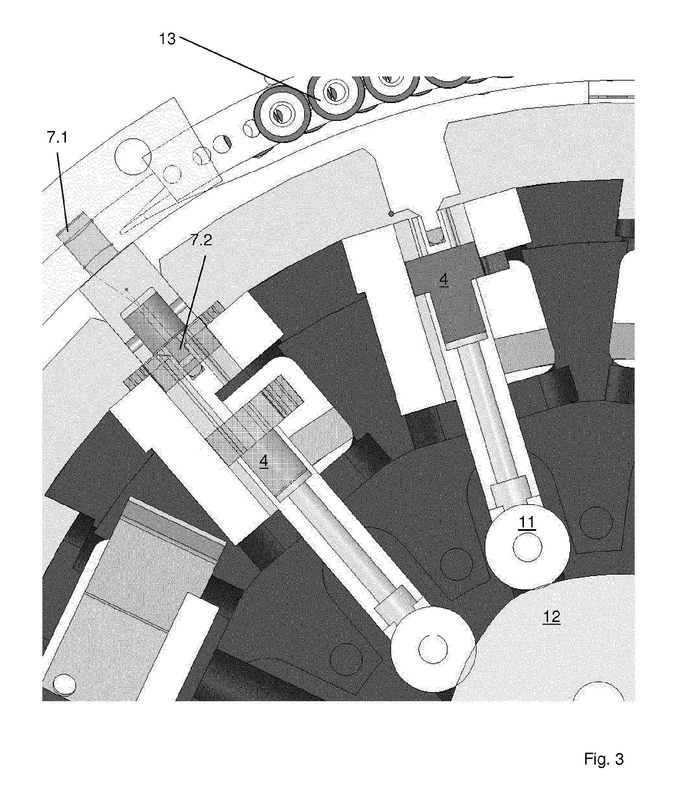

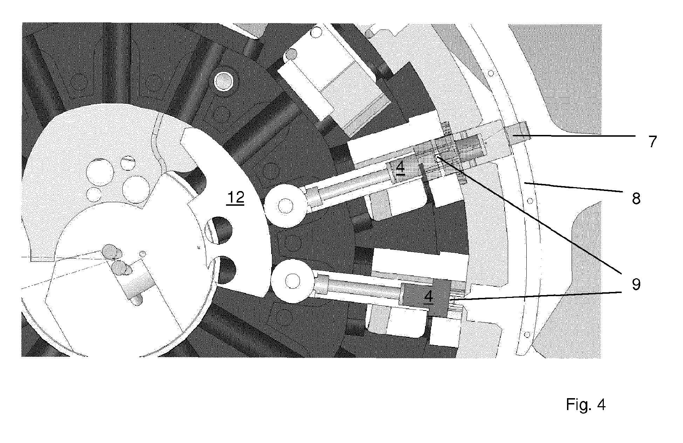

Figures 1 - 4 show the inventive apparatus. This inventive apparatus comprises a central ring 6 which is, in the present case, made from a single piece. Attached to the central ring 6 are a number, here 15, of press chambers 2. The central ring and the press chambers 2 rotate clockwise. Attached to each press chamber 2 is an outer stamp 3 and an inner stamp 4. The outer stamp 3 is preferably pivotably attached to the press chamber and/or the inner ring and can be pivoted to open and close the press chamber. The inner stamp 4 is attached to one end of a plunger 10, which comprises at its other end a roll 11, which rolls along a stationary drive curve 12. Each plunger 10 co-rotates with the central ring 6 and is radially displaced by the drive curve 12. As can be further seen, each pressure chamber comprises an insert area 5, which is utilized to insert a stick into the mass, for example the sugar mass of a lollypop. Additionally, the inventive apparatus 1 comprises closure means 7 which can close the insert area 5. The closure means 7 are driven by drive means 8, which is in the present case a stationary curved strip. As described in further detail later on, each closure means 7 co-rotates with the central-ring 6 and moves along the curved strip 8 and is thus displaced radially inwardly and outwardly. After a piece of mass from which the lollypop is formed has been placed into the press chamber, the outer stamp 3 is pivoted into its closure position. Subsequently, the closure means 7 are driven inwardly to close the insert area 7 entirely. During the further clockwise rotation of the central ring 6, the inner stamps 3 are moved outwardly, driven by the drive curve 12 to preform the mass in the chamber. Since the insert area 5 is closed by the closure means 7, no mass can escape from the insert area during the preforming of the mass. After this preforming is completed, the drive curve 12 preferably comprises a relaxation zone in which the pressure from the inner stamp is at least not increased, preferably decreased. Furthermore, after the preforming is completed, particularly in the relaxation zone, the drive curve 8 moves the closure means 7 outwardly to reopen the insert area 5 and a lollypop stick 9 is inserted into the mass. During the subsequent rotation, the closure means 7 and the outerstamp 3 stay in their position, while the inner stamp 4 is further moved outwardly by the drive curve 12 to increase the pressure on the mass again and to form the mass into its final form. After the forming of the lollipop mass is completed, the press chamber 2 is opened by pivoting the outer stamp 3 around its pivot-axis and the lollipop is discharged from the press chamber 2.

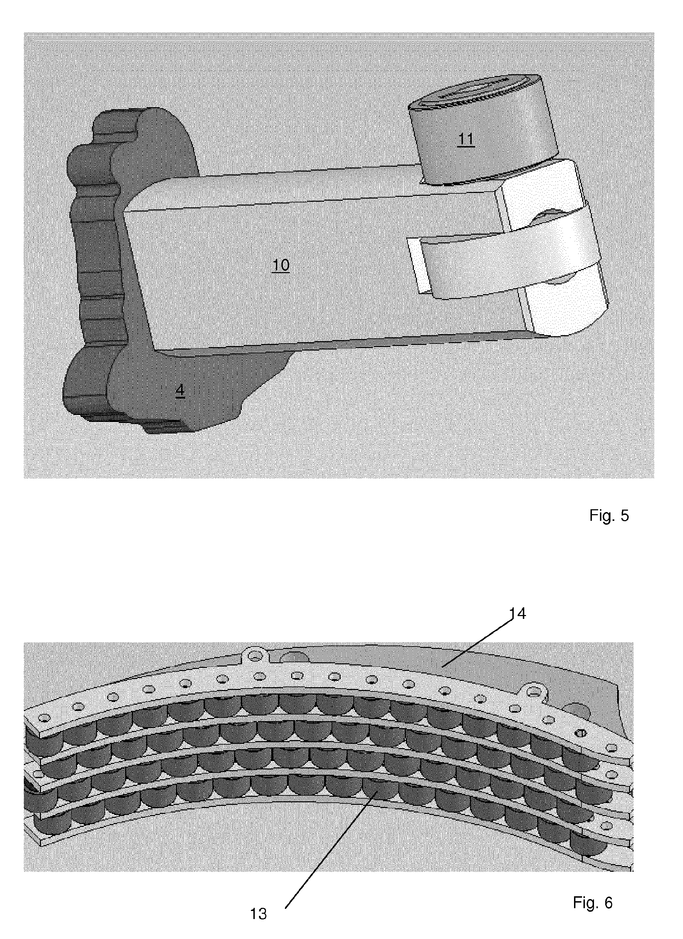

Figure 5 shows a preferred embodiment of the plunger 10. At one end of this plunger 10, the inner stamp 4 is attached, while at the other end, the plunger 10 comprises a roll 11, which rolls along the stationary drive curve 12. According to a preferred or inventive embodiment of the present invention, the plunger comprises a non-circular cross section, here an essentially rectangular cross section. This non-circular cross section has the advantage, that the plunger cannot rotate in its guiding in the central ring 6. Furthermore, the non-circular cross section has the advantage, that less space in the angular direction of the central-ring 6 is needed for the plunger and that thus more press chambers at the same diameter of the central ring can be provided.

Figure 6 shows the outer pressure zone, which maintains the outer stamp 3 in its closed position, preferably after the stick has been inserted into the preformed mass and the final forming of the lollipop mass takes place. The outer pressure zone is preferably a part of a ring which extends around the central ring and its pressure chambers. The pressure zone comprises a multitude of rolls 13, which are arranged in a multitude, here four, rows, which are placed in parallel around the circumference of the central ring. The diameter of each roll is approximately 14 -16 mm. This small diameter assures, that the outer stamp 4 or a lid to which the outer stamp 4 is attached, is always in contact with 4 - 5 rolls, which results in a more equal pressure distribution and results in less wear.

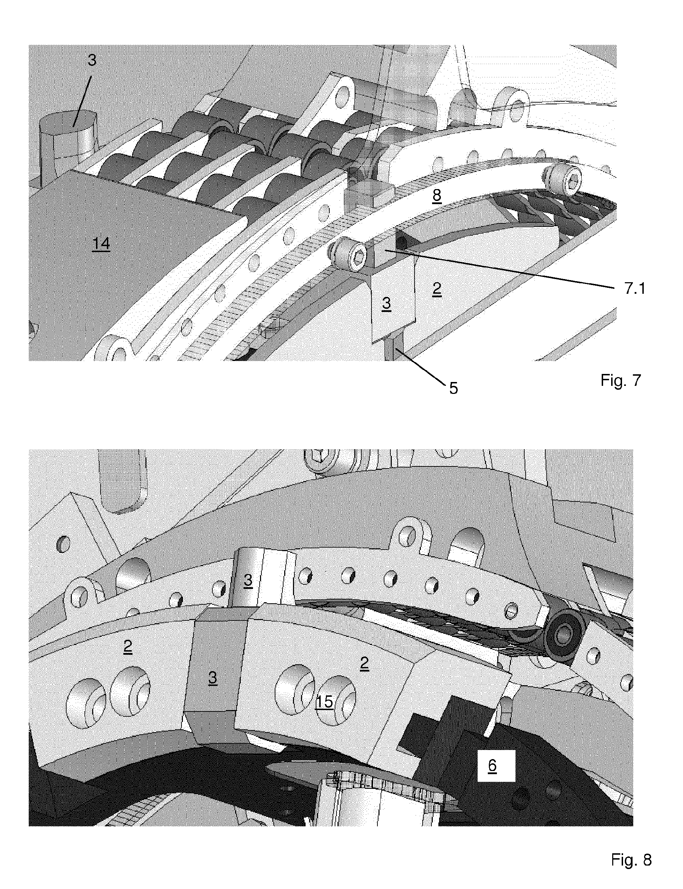

Figure 7 shows details of the drive means 8. In the present case, the drive means 8 are provided as a stationary curved strip. The first end 7.1 of the closure means 7 is in the present case U-shaped so that it circumferences the curved strip 8 on two opposite sides, so that the drive curve can move the closure means 7 radially inwardly and outwardly.

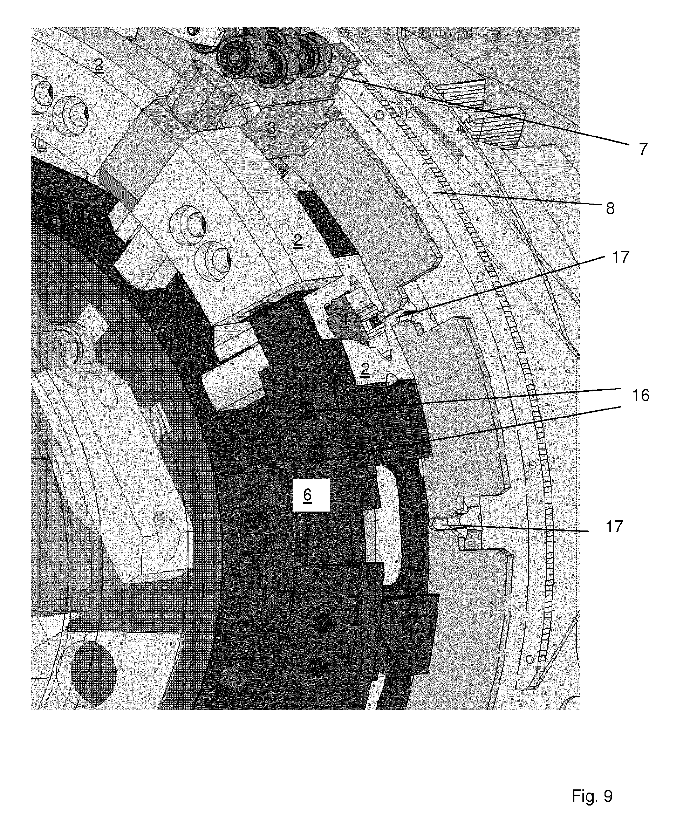

Figures 8 and 9 show details of the central ring 6 and the attachment of the press chamber 2 and the outer stamp 3 to the central-ring. The ring is in the present case made from a single piece, preferably milled out of a single piece. Attached to the central ring 6 are the pressure chambers 2 and the outer stamp 3. The pressure chambers 2 are preferably attached to the inner ring by fastening means 15, here screws. As can be further seen from figure 9, attached to the curved strip 8 are means 17 to guide the stick into the pressure chamber.

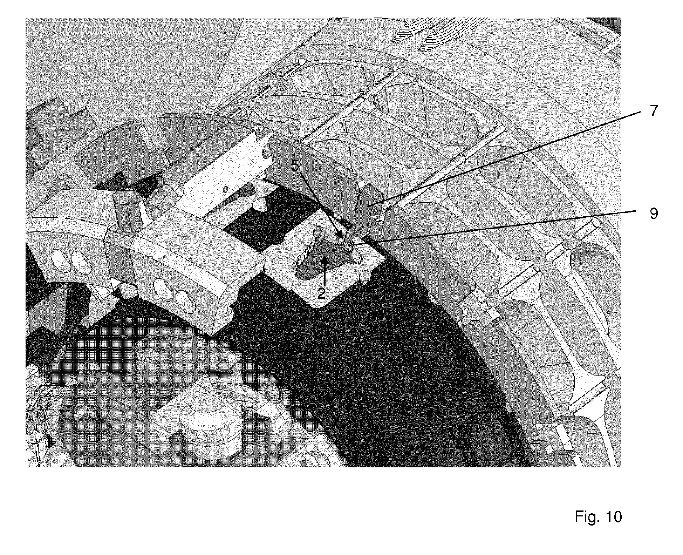

Figure 10 shows yet another embodiment of the present invention. In the present case, the insert area 5 is closed/sealed by the stick during the prepressing of the mass. It can be clearly seen, that the stick extends into the insert area 5 but not yet into the press chamber 2. Thus, the stick is not yet inserted into the mass, but no mass leaks out of the press chamber 2 during prepressing of the mass. As the chamber 2 rotates further, the stick is inserted into the mass and subsequently, the mass is brought into its final shape.

## Claims

1. Method for moulding a lollipop from a piece of mass of a sugar bar or a similar material, comprising the steps:
- providing a rotatable central ring (6) having an axis of rotation and a multitude of circumferentially spaced, radially extending press chambers (2), wherein each press chamber comprises an insert area (5) to insert a stick (9) into the mass
- providing a pair of inner and outer stamps (3, 4) per press chamber (2) for pressing a pieces of the mass into the desired shape by displacing at least the inner stamp (4) relative to the press chamber (2),
- prepressing the mass
**characterized in, that** the insert area (5) is, at least partially, preferably entirely, closed during the prepressing of the mass.

2. Method according to claim 1, **characterized in, that** the insert area (5) is closed by least partially, preferably entirely closed by a closing means (7) and/or the stick (9).

3. Method according to claim 1, **characterized in, that** the insert area (5) is least partially, preferably entirely closed prior to inserting the stick (9) and then reopened for the insertion of the stick.

4. Method according to claim 1 - 3, **characterized in, that** one closing means (7) per press chamber (2) is provided to close the insert area (5).

5. Method according to claim 3 or 4, **characterized in, that** the closing means (7) is moved radially inward to close the insert area (5) and then radially outward to reopen it.

6. Method according to one of the preceding claims, **characterized in, that** the mass is preformed, subsequently, a stick is inserted into the mass and then the mass is brought into its final shape, wherein the insert area is closed during the performing of the mass.

7. Method according to one of claims 3 - 6, **characterized in, that** a drive means (8) is provided that moves each closing means (7) in two opposite directions.

8. Method according to one of claims 4 - 7, **characterized in, that** the closing means (7) are moved relative to the outer stamp (3).

9. Apparatus for moulding a lollipop from a piece of mass of a sugar bar or a similar material, comprising:
- a rotatable central ring (6) having an axis of rotation and a multitude of circumferentially spaced, radially extending press chambers (2), wherein each press chamber comprises an insert area (5) to insert a stick (9) into the mass
- a pair of inner and outer stamps (3, 4) per press chamber (2) for pressing a pieces of the mass into the desired shape, whereas at least the inner stamp (4) is displaceable and during pressing and the inner stamp (4) is driven by a pressure curve (12),
**characterized in, that** it comprises closing means (7) and/or the stick (9) is utilized to close the insert area (5) during a prepressing of the mass.

10. Apparatus according to claim 9, **characterized in that** a gap of the size of the diameter of the stick is left between the closing means (7) and the inner stamp (4).

11. Apparatus according to claims 9 or 10, **characterized in, that** the closing means (7) is slidably barred at the outer stamp (3).

12. Apparatus according to one of the preceding claims **characterized in, that** the central ring 6 is made from one piece.

13. Apparatus according to claim 12, **characterized in, that** the press chambers (2), the outer stamp (3) and/or the inner stamp (4) are, preferably reversibly, attached to the central ring (6).

## Patentansprüche

1. Verfahren zum Formen eines Lutschers aus einem Stück einer Masse einer Zuckerstange oder einem ähnlichen Material, die folgenden Schritte umfassend:
- Bereitstellen eines drehbaren zentralen Rings (6) mit einer Rotationsachse und einer Mehrzahl von umfänglich mit Zwischenabständen angeordneten, sich radial erstreckenden Presskammern (2), wobei jede Presskammer einen Einführungsbereich (5) zum Einführen eines Stiels (9) in die Masse umfasst;
- Bereitstellen eines Paars innerer und äußerer Stempel (3, 4) je Presskammer (2) zum Pressen von Teilen der Masse in die gewünschte Form, indem wenigstens der innere Stempel (4) im Verhältnis zu der Presskammer (2) verschoben wird;
- Vorpressen der Masse,
**dadurch gekennzeichnet, dass** der Einführungsbereich (5) während dem Vorpressen der Masse wenigstens teilweise, vorzugsweise vollständig geschlossen ist.

2. Verfahren nach Anspruch 1, **dadurch gekennzeichnet, dass** der Einführungsbereich (5) wenigstens teilweise, vorzugsweise vollständig durch ein Verschlussmittel (7) und/oder den Stiel (9) verschlossen ist.

3. Verfahren nach Anspruch 1, **dadurch gekennzeichnet, dass** der Einführungsbereich (5) wenigstens teilweise, vorzugsweise vor dem Einführen des Stiels (9) vollständig verschlossen ist und danach zum Einführen des Stiels wieder geöffnet wird.

4. Verfahren nach einem der Ansprüche 1 bis 3, **dadurch gekennzeichnet, dass** ein Verschlussmittel (7) je Presskammer (2) zum Verschließen des Einführungsbereichs (5) vorgesehen ist.

5. Verfahren nach Anspruch 3 oder 4, **dadurch gekennzeichnet, dass** das Verschlussmittel (7) radial einwärts bewegt wird, um den Einsatzbereich (5) zu verschließen und danach radial auswärts, um den Bereich wieder zu öffnen.

6. Verfahren nach einem der vorstehenden Ansprüche, **dadurch gekennzeichnet, dass** die Masse vorgeformt wird, wobei danach ein Stiel in die Masse eingeführt wird, und wobei die Masse danach in ihre finale Form gebracht wird, wobei der Einsatzbereich während dem Vorformen der Masse verschlossen ist.

7. Verfahren nach einem der Ansprüche 3 bis 6, **dadurch gekennzeichnet, dass** eine Antriebseinrichtung (8) bereitgestellt ist, welche jedes Verschlussmittel (7) in zwei entgegengesetzte Richtungen bewegt.

8. Verfahren nach einem der Ansprüche 4 bis 7, **dadurch gekennzeichnet, dass** die Verschlussmittel (7) im Verhältnis zu dem äußeren Stempel (3) bewegt werden.

9. Vorrichtung zum Formen eines Lutschers aus einem Stück einer Masse einer Zuckerstange oder einem ähnlichen Material, umfassend:
- einen drehbaren zentralen Ring (6) mit einer Rotationsachse und einer Mehrzahl von umfänglich mit Zwischenabständen angeordneten, sich radial erstreckenden Presskammern (2), wobei jede Presskammer einen Einführungsbereich (5) zum Einführen eines Stiels (9) in die Masse umfasst;
- ein Paar innerer und äußerer Stempel (3, 4) je Presskammer (2) zum Pressen von Teilen der Masse in die gewünschte Form, wobei wenigstens der innere Stempel (4) verschiebbar ist, und wobei während dem Pressen der innere Stempel (4) durch eine Druckkurve (12) angetrieben wird,
**dadurch gekennzeichnet, dass** die Vorrichtung Verschlussmittel (7) umfasst, und/oder wobei der Stiel (9) verwendet wird, um den Einführungsbereich (5) während dem Vorpressen der Masse zu verschließen.

10. Vorrichtung nach Anspruch 9, **dadurch gekennzeichnet, dass** ein Spalt mit der Größe des Durchmessers des Stiels zwischen dem Verschlussmittel (7) und dem inneren Stempel (4) frei bleibt.

11. Vorrichtung nach Anspruch 9 oder 10, **dadurch gekennzeichnet, dass** das Verschlussmittel (7) an dem äußeren Stempel (3) verschiebbar verriegelt ist.

12. Vorrichtung nach einem der vorstehenden Ansprüche, **dadurch gekennzeichnet, dass** der zentrale Ring (6) aus einem Stück hergestellt ist.

13. Vorrichtung nach Anspruch 12, **dadurch gekennzeichnet, dass** die Presskammern (2), der äußere Stempel (3) und/oder der innere Stempel (4) vorzugsweise umkehrbar an dem zentralen Ring (6) angebracht sind.

## Revendications

1. Procédé de moulage de sucette à partir d'un morceau de masse d'une barre de sucre ou d'un matériau similaire, comprenant les étapes consistant à :
fournir un anneau central rotatif (6) ayant un axe de rotation et une multitude de chambres de pression (2) s'étendant radialement et espacées de manière circonférentielle, dans lequel chaque chambre de pression comprend une zone d'insertion (5) pour insérer un bâtonnet (9) dans la masse,
fournir une paire de matrices interne et externe (3, 4) par chambre de pression (2) pour presser un morceau de la masse dans la forme désirée en déplaçant au moins la matrice interne (4) par rapport à la chambre de pression (2),
prépresser la masse,
**caractérisé en ce que** la zone d'insertion (5) est, au moins partiellement, de préférence totalement, fermée au cours de la prépression de la masse.

2. Procédé selon la revendication 1, **caractérisé en ce que** la zone d'insertion (5) est fermée au moins partiellement, de préférence totalement, par un moyen de fermeture (7) et/ou le bâtonnet (9).

3. Procédé selon la revendication 1, **caractérisé en ce que** la zone d'insertion (5) est fermée au moins partiellement, de préférence totalement, avant l'insertion du bâtonnet (9), puis rouverte pour l'insertion du bâtonnet.

4. Procédé selon l'une des revendications 1-3, **caractérisé en ce qu'**un moyen de fermeture (7) par chambre de pression (2) est conçu pour fermer la zone d'insertion (5).

5. Procédé selon la revendication 3 ou 4, **caractérisé en ce que** le moyen de fermeture (7) est déplacé radialement vers l'intérieur pour fermer la zone d'insertion (5) puis radialement vers l'extérieur pour la rouvrir.

6. Procédé selon l'une quelconque des revendications précédentes, **caractérisé en ce que** la masse est préformée, ultérieurement un bâtonnet est inséré dans la masse puis la masse est amenée dans sa forme finale, dans lequel la zone d'insertion est fermée pendant le préformage de la masse.

7. Procédé selon l'une quelconque des revendications 3-6, **caractérisé en ce qu'**un moyen d'entraînement (8) déplace chaque moyen de fermeture (7) dans deux directions opposées.

8. Procédé selon l'une quelconque des revendications 4-7, **caractérisé en ce que** les moyens de fermeture (7) sont déplacés par rapport à la matrice externe (3).

9. Appareil de moulage d'une sucette à partir d'un morceau de masse d'une barre de sucre ou d'un matériau similaire, comprenant :
un anneau central rotatif (6) ayant un axe de rotation et une multitude de chambres de pression (2) s'étendant radialement et espacées de manière circonférentielle, dans lequel chaque chambre de pression comprend une zone d'insertion (5) pour insérer un bâtonnet (9) dans la masse,
une paire de matrices interne et externe (3, 4) par chambre de pression (2) pour presser un morceau de la masse à la forme désirée, tandis qu'au moins la matrice interne (4) peut être déplacée pendant le pressage et la matrice interne (4) est entraînée par une courbe de pression (12),
**caractérisé en ce qu'**il comprend un moyen de fermeture (7) et/ou le bâtonnet (9) est utilisé pour fermer la zone d'insertion (5) pendant un prépressage de la masse.

10. Appareil selon la revendication 9, **caractérisé en ce qu'**un espace de la taille du diamètre du bâtonnet est laissé entre le moyen de fermeture (7) et la matrice interne (4).

11. Dispositif selon les revendications 9 ou 10, **caractérisé en ce que** le moyen de fermeture (7) est barré de manière coulissante au niveau de la matrice externe (3).

12. Dispositif selon l'une des revendications précédentes, **caractérisé en ce que** l'anneau central (6) est monobloc.

13. Appareil selon la revendication 12, **caractérisé en ce que** les chambres de pression (2), la matrice externe (3) et/ou la matrice interne (4) sont, de préférence de manière réversible, fixées à l'anneau central (6).
